# EUROPEAN PATENT APPLICATION

(11) **EP 4 588 973 A1**
(43) Date of publication of application: **23.07.2025**
(21) Application number: 23865533.6
(22) Date of filing: 12.09.2023
(51) Int. Cl.: C08L 23/16, B32B 27/32, B60J 10/16, C08K 5/20, C08L 23/12, C08L 61/06, C08L 91/00

(54) **THERMOPLASTIC ELASTOMER COMPOSITION AND MOLDED BODY OF SAME**

(30) Priority: 13.09.2022 JP 2022145353
(71) Applicant: Mitsui Chemicals, Inc., Tokyo 104-0028 (JP)
(72) Inventor: SHIBATA Yasuhiro, Tokyo 104-0028 (JP); CHIGAMA Kakeru, Ichihara-shi, Chiba 299-0108 (JP); YAMAMOTO Akihiro, Ichihara-shi, Chiba 299-0108 (JP)
(74) Representative: Hoffmann Eitle
(86) International application number: PCT/JP2023/033220
(87) International publication number: WO 2024/058181

(57) **Abstract**

Provided is, for example, a thermoplastic elastomer composition having excellent heat aging resistance when exposed to a high-temperature environment for a long period of time, also excellent hardness and mechanical properties as well as excellent extrusion processability.

A thermoplastic elastomer composition (I) including a cross-linked product of an ethylene/α-olefin/nonconjugated polyene copolymer (A) having a weight-average molecular weight of 350,000 or more, with a phenolic resin-based cross-linking agent (E), and including 360 to 460 parts by mass of a crystalline polyolefin (B), 2 to 6 parts by mass of a fatty acid-based lubricant (D), and 80 parts by mass or more of a softener (C1), relative to 100 parts by mass of the copolymer (A), in which the thermoplastic elastomer composition (I) has a 1/2 crystallization time at 120°C of 200 seconds or less, and a polyolefin component included in the thermoplastic elastomer composition (I) has a maximum spherulite size in a range of 8 µm or less.

## Description

### Technical Field

The present invention relates to a thermoplastic elastomer composition and a molded article of the same.

### Background Art

Known molded articles made of a thermoplastic elastomer material including a rubber component, a resin component, for example, are those having a multi-layer structure with a slidable covering body formed on the surface (for example, a part required slidability) of a substrate constituting the molded article. Examples of such a molded article having a multi-layer structure include an automotive glass run channel.

Materials used for the slidable covering body of an automotive glass run channel are required to have well-balanced various properties. Examples of such properties include particularly oil resistance, reduced oil bleeding at a high temperature (hereinafter, also written as the "heat aging resistance"), hardness, and mechanical strengths.

Concerning the heat aging resistance, some consider that when the covering body made of materials including a softener is laminated on the substrate (glass run channel itself), the difference in the concentrations between the softener in the covering body and the softener in the substrate causes the softener (oil) to migrate and allows a bleeding phenomenon to occur.

Patent Literature 1 discloses a thermoplastic elastomer composition comprising a cross-linked product of an ethylene/α-olefin/nonconjugated polyene copolymer (A), wherein the α-olefin has 3 to 20 carbon atoms, with a phenolic resin-based cross-linking agent (E), and comprising 360 to 460 parts by mass of a crystalline polyolefin (B), 70 to 140 parts by mass of a softener (C), and 2 to 6 parts by mass of a fatty acid-based lubricant (D), based on 100 parts by mass of the copolymer (A), so that the thermoplastic elastomer composition has excellent heat aging resistance, excellent hardness and mechanical properties (tensile modulus of elasticity, tensile strength at break), and excellent moldability.

### Citation List

### Patent Literature

[Patent Literature 1] WO 2020/189633

### Summary of Invention

### Technical Problem

However, the composition described in Patent Literature 1 has been found to have room for further improvement in physical properties such as heat aging resistance.

An object of the present invention is to provide a thermoplastic elastomer composition that has excellent heat aging resistance (specifically, heat aging resistance when exposed to a high-temperature environment for a long period of time), also excellent hardness and mechanical properties (tensile modulus of elasticity, tensile strength at break) as well as excellent extrusion processability (specifically, the ability to inhibit, for example, surface roughness of a molded article upon extrusion molding), and a molded article using the same.

### Solution to Problem

The present invention relates to, for example, the following [1] to [13].
[1] A thermoplastic elastomer composition (I) comprising a cross-linked product of an ethylene/α-olefin/nonconjugated polyene copolymer (A), wherein the α-olefin has 3 or more carbon atoms, satisfying the following requirements (a1) to (a4), with a phenolic resin-based cross-linking agent (E), and comprising
   360 to 460 parts by mass of a crystalline polyolefin (B) having a melt flow rate of 8.0 g/10 min or less as measured under conditions of 230°C and a load of 2.16 kg;
   2 to 6 parts by mass of a fatty acid-based lubricant (D), and
   80 parts by mass or more of a softener (C1), based on 100 parts by mass of the copolymer (A);
   wherein the thermoplastic elastomer composition (I) has a 1/2 crystallization time at 120°C of 200 seconds or less, and
   a polyolefin component comprised in the thermoplastic elastomer composition (I) has a maximum spherulite size in a range of 8 µm or less:
      (a1) a weight-average molecular weight is 350,000 or more;
      (a2) an intrinsic viscosity [η] is 4.0 dL/g or more;
      (a3) an ethylene content is 57.0% by mass or more; and
      (a4) a content of the nonconjugated polyene is 4.0% by mass or more.
[2] The thermoplastic elastomer composition (I) according to [1], wherein the crystalline polyolefin (B) is a propylene homopolymer, and the crystalline propylene (B) has a melting point of 150 to 170°C as measured by differential scanning calorimetry.
[3] A molded article comprising the thermoplastic elastomer composition (I) according to [1] or [2].
[4] A laminate formed by laminating: a layer comprising the thermoplastic elastomer composition (I) according to [1] or [2]; and
   a layer comprising a soft material having Type A hardness of 50 to 95 measured in accordance with ISO 7619.
[5] The laminate according to [4], wherein the soft material has Type A hardness of 50 to 85.
[6] The laminate according to [4] or [5], wherein the soft material comprises a thermoplastic elastomer composition (II) comprising a thermoplastic elastomer,
   the thermoplastic elastomer composition (II) comprises a softener (C2) having a solubility parameter of 6.6 to 7.1, and
   a mass fraction (W_{2C}) of the softener (C2) relative to a total of the thermoplastic elastomer composition (II) is 30 to 60% by mass.
[7] The laminate according to any one of [4] to [6], wherein a ratio (W_{1C}/W_{2C}) of a mass fraction (W_{1C}) of the softener (C1) relative to a total of the thermoplastic elastomer composition (I) to the W_{2C} is 0.5 or less.
[8] The molded article according to [3], which is a window frame seal, a glass run channel, or a building gasket.
[9] The laminate according to any one of [4] to [7], which is a window frame seal, a glass run channel, or a building gasket.
[10] A method for producing a thermoplastic elastomer composition (I), comprising a step (β) of mixing a mixture (α) comprising an ethylene/α-olefin/nonconjugated polyene copolymer (A), wherein the α-olefin has 3 or more carbon atoms, satisfying the following requirements (a1) to (a4) and a softener (C1);
   360 to 460 parts by mass of a crystalline polyolefin (B) having a melt flow rate of 8.0 g/10 minutes or less measured under conditions of 230°C and a load of 2.16 kg;
   2 to 9 parts by mass of a phenolic resin-based cross-linking agent (E);
   2 to 6 parts by mass of a fatty acid-based lubricant (D), based on 100 parts by mass of the copolymer (A); and
   optionally the softener (C1);
   wherein a total amount of the softener (C1) comprised in the mixture (α) and the softener (C1) optionally mixed in the step (β) is 80 parts by mass or more, and
   a mass fraction of the softener (C1) comprised in the mixture (α) relative to the total amount of the softener (C1) comprised in the mixture (α) and the softener (C1) optionally mixed in the step (β) is 60 to 100% by mass:
      (a1) a weight-average molecular weight is 350,000 or more;
      (a2) an intrinsic viscosity [η] is 4.0 dL/g or more;
      (a3) an ethylene content is 57.0% by mass or more; and
      (a4) a content of the nonconjugated polyene is 4.0% by mass or more.
[11] The method for producing a thermoplastic elastomer composition (I) according to [10], further comprising a step (α) of kneading the copolymer (A) and the softener (C1) to prepare the mixture (α).
[12] The method for producing a thermoplastic elastomer composition (I) according to [10] or [11], wherein a mass fraction of the softener (C1) comprised in the mixture (α) relative to a total amount of the softener (C1) comprised in the mixture (α) and the softener (C1) optionally mixed in the step (β) is 95 to 100% by mass.
[13] The method for producing a thermoplastic elastomer composition (I) according to any one of [10] to [12], wherein the step (β) comprises a step of dynamically heat treating the copolymer (A), the crystalline polyolefin (B), the softener (C1) and the fatty acid-based lubricant (D) in the presence of the phenolic resin-based cross-linking agent (E).

### Advantageous Effects of Invention

The thermoplastic elastomer composition of the present invention has excellent heat aging resistance when exposed to a high-temperature environment for a long period of time, excellent hardness and mechanical properties (tensile modulus of elasticity, tensile strength at break), and excellent extrusion processability.

Moreover, the molded article and laminate of the present invention also have excellent heat aging resistance when exposed to a high-temperature environment for a long period of time, excellent hardness and mechanical properties (tensile modulus of elasticity and tensile strength at break).

### Brief Description of Drawings

[Figure 1] Figure 1 is an electron microscope photograph illustrating a spherulite state of a polyolefin component of the composition of Example 1
[Figure 2] Figure 2 is an electron microscope photograph illustrating a spherulite state of a polyolefin component of the composition of Comparative Example 5

### Description of Embodiments

### [Thermoplastic elastomer composition (I)]

The thermoplastic elastomer composition (I) according to the present invention is characterized by comprising
a cross-linked product of an ethylene/α-olefin/nonconjugated polyene copolymer (A), satisfying the following requirements (a1) to (a4), with a phenolic resin-based cross-linking agent (E); and
a crystalline polyolefin (B) having a melt flow rate of 8.0 g/10 minutes or less as measured under conditions of 230°C and a load of 2.16 kg; a softener (C1); and a fatty acid-based lubricant (D);
wherein the thermoplastic elastomer composition (I) has a 1/2 crystallization time at 120°C of 200 seconds or less, and
a polyolefin component in the thermoplastic elastomer composition (I) has a maximum spherulite size in a range of 8 µm or less:
   (a1) a weight-average molecular weight is 350,000 or more;
   (a2) an intrinsic viscosity [η] is 4.0 dL/g or more;
   (a3) an ethylene content is 57.0% by mass or more; and
   (a4) a content of the nonconjugated polyene is 4.0% by mass or more.

### <Ethylene/α-olefin/nonconjugated polyene copolymer (A)>

The ethylene/α-olefin/nonconjugated polyene copolymer (A) used in the present invention (hereinafter also simply referred to as "copolymer (A)") is an ethylene/α-olefin/nonconjugated polyene copolymer comprising structural units derived from ethylene, structural units derived from at least one α-olefin having 3 or more carbon atoms (preferably 20 or less), and structural units derived from at least one nonconjugated polyene.

Examples of the α-olefins include, for example, linear α-olefins without a side chain such as propylene (with 3 carbon atoms), 1-butene (with 4 carbon atoms), 1-nonene (with 9 carbon atoms), 1-decene (with 10 carbon atoms), 1-nonadecene (with 19 carbon atoms), and 1-eicosene (with 20 carbon atoms); and α-olefins with a side chain such as 4-methyl-1-pentene, 9-methyl-1-decene, 11-methyl-1-dodecene, and 12-ethyl-1-tetradecene. These α-olefins may be used singly, or two or more may be used in combination. Among these, preferred are α-olefins having 3 to 10 carbon atoms such as propylene, 1-butene, 1-nonene, and 1-decene and from the viewpoint of heat resistance, particularly preferred is propylene.

Examples of the nonconjugated polyene include chain nonconjugated dienes such as 1,4-hexadiene, 1,6-octadiene, 2-methyl-1,5-hexadiene, 6-methyl-1,5-heptadiene, and 7-methyl-1,6-octadiene; cyclic nonconjugated dienes such as cyclohexadiene, dicyclopentadiene, methyltetrahydroindene, 5-vinyl-2-norbornene, 5-ethylidene-2-norbornene, 5-methylene-2-norbornene, 5-isopropylidene-2-norbornene, and 6-chloromethyl-5-isopropenyl-2-norbornene; and triens such as 2,3-diisopropylidene-5-norbornene, 2-ethylidene-3-isopropylidene-5-norbornene, 2-propenyl-2,5-norbornadiene, 1,3,7-octatriene, 1,4,9-decatriene, 4,8-dimethyl-1,4,8-decatriene, and 4-ethylidene-8-methyl-1,7-nonadiene. These nonconjugated polyenes may be used singly, or two or more may be used in combination. Of these, cyclic nonconjugated dienes such as 1,4-hexadiene, 5-ethylidene-2-norbornene, 5-vinyl-2-norbornene, and mixtures of 5-ethylidene-2-norbornene, and 5-vinyl-2-norbornene are preferable, and 5-ethylidene-2-norbornene and 5-vinyl-2-norbornene are more preferable.

Examples of the copolymer (A) include ethylene/propylene/1,4-hexadiene copolymers, ethylene/1-pentene/1,4-hexadiene copolymers, ethylene/1-hexene/1,4-hexadiene copolymers, ethylene/1-heptene/1,4-hexadiene copolymers, ethylene/1-octene/1,4-hexadiene copolymers, ethylene/1-nonene/1,4-hexadiene copolymers, ethylene/1-decene/1,4-hexadiene copolymers, ethylene/propylene/1-octene/1,4-hexadiene copolymers, ethylene/propylene/5-ethylidene-2-norbornene copolymers, ethylene/1-pentene/5-ethylidene-2-norbornene copolymers, ethylene/1-hexene/5-ethylidene-2-norbornene copolymers, ethylene/1-heptene/5-ethylidene-2-norbornene copolymers, ethylene/1-octene/5-ethylidene-2-norbornene copolymers, ethylene/1-nonene/5-ethylidene-2-norbornene copolymers, ethylene/1-decene/5-ethylidene-2-norbornene copolymers, ethylene/propylene/1-octene/5-ethylidene-2-norbornene copolymers, ethylene/propylene/5-ethylidene-2-norbornene/5-vinyl-2-norbornene copolymers, ethylene/1-pentene/5-ethylidene-2-norbornene/5-vinyl-2-norbornene copolymers, ethylene/1-hexene/5-ethylidene-2-norbornene/5-vinyl-2-norbornene copolymers, ethylene/1-heptane/5-ethylidene-2-norbornene/5-vinyl-2-norbornene copolymers, ethylene/1-octene/5-ethylidene-2-norbornene/5-vinyl-2-norbornene copolymers, ethylene/1-nonene/5-ethylidene-2-norbornene/5-vinyl-2-norbornene copolymers, ethylene/1-decene/5-ethylidene-2-norbornene/5-vinyl-2-norbornene copolymers, and ethylene/propylene/1-octene/5-ethylidene-2-norbornene/5-vinyl-2-norbornene copolymers.

The copolymer (A) may be used singly, or two or more may be used in combination.

The copolymer (A) satisfies the following requirements (a1) to (a4):
(a1) a weight-average molecular weight is 350,000 or more;
(a2) an intrinsic viscosity [η] is 4.0 dL/g or more;
(a3) an ethylene content is 57.0% by mass or more; and
(a4) a content of the nonconjugated polyene is 4.0% by mass or more.

The lower limit of the weight-average molecular weight (Mw) of the copolymer (A) is 350,000 or more, preferably 352,000 or more, and more preferably 355,000 or more. The upper limit of Mw is not particularly limited, but is usually 700,000 or less and preferably 600,000 or less. These upper limit and lower limit can be arbitrarily combined for use.

The copolymer (A) with Mw less than 350,000 has a likelihood of not achieving desired heat aging resistance.

The lower limit of the intrinsic viscosity [η] of the copolymer (A) measured in decalin at 135°C is 4.0 dL/g or more, preferably 4.1 dL/g or more, and more preferably 4.2 dL/g or more. The upper limit of the intrinsic viscosity [η] is not particularly limited, but is preferably 10.0 dL/g or less and more preferably 8.0 dL/g or less. These upper limit and lower limit can be arbitrarily combined for use. The intrinsic viscosity less than 4.0 dL/g tends not to provide the desired heat aging resistance.

The ethylene content of the copolymer (A) is 57.0% by mass or more, preferably 60.0 to 75.0% by mass, and more preferably 65.0 to 70.0% by mass.

The lower limit of the nonconjugated polyene content of the copolymer (A) is 4.0% by mass or more, preferably 4.2% by mass or more, and more preferably 4.4% by mass or more. The upper limit of the nonconjugated polyene content of the copolymer (A) can be 5.0% by mass or less. These upper limit and lower limit can be arbitrarily combined.

The ethylene content and nonconjugated polyene content of the copolymer (A) are determined by the ¹³C-NMR method described later.

When the ethylene content of the copolymer (A) is less than 57.0% by mass or the nonconjugated polyene content is less than 4.0% by mass, the desired heat aging resistance tends not to be obtained.

The copolymer (A) may be composed solely of a fossil fuel-derived monomer, or may be composed solely of a biomass-derived monomer, or may be used in combination of the fossil fuel-derived monomer and biomass-derived monomer.

The fossil fuels are petroleum, coal, natural gas, shale gas, or combinations thereof. The biomass is any renewable natural raw material and its residues, such as those derived from plants or animals, including a fungus, yeast, an algae, and bacteria.

### (Method for producing the copolymer (A))

The copolymer (A) can be produced by, for example the method described in WO2018/181121, paragraphs [0028] to

### <Crystalline polyolefin (B)>

The crystalline polyolefin (B) is not particularly limited as long as it is a crystalline polymer obtained from olefins but is preferably a polymer made of a crystalline high molecular weight solid product obtained by polymerizing one or more monoolefins by a high pressure method or a low pressure method. Examples of such a polymer include isotactic monoolefin polymers and syndiotactic monoolefin polymers.

The crystalline copolymer (B) may be composed solely of a fossil fuel-derived monomer, or may be composed solely of a biomass-derived monomer, or may be used in combination of the fossil fuel-derived monomer and biomass-derived monomer.

The crystalline polyolefin (B) can be synthesized by a conventionally known method, or a commercial product can be used.

The crystalline polyolefin (B) may be used singly, or two or more may be used in combination.

Examples of the olefin to be used as the ingredient of the crystalline polyolefin (B) include α-olefins having 2 to 20 carbon atoms (excluding propylene) such as ethylene, propylene, 1-butene, 1-pentene, 1-hexene, 1-octene, 1-decene, 2-methyl-1-propene, 3-methyl-1-pentene, 4-methyl-1-pentene, and 5-methyl-1-hexene. These may be used singly, or two or more may be used in combination.

Of the crystalline polyolefin (B), propylene homopolymers made of olefins primarily having propylene or propylene (co)polymers, which are propylene copolymers, considering the heat resistance and oil resistance, and propylene homopolymers are more preferable considering the tensile strength at break. In the case of the propylene copolymer, a content of the propylene-derived structural unit is preferably 40 mol% or more, more preferably 50 mol% or more, and the olefins to be monomer-derived structural units other than propylene are preferably α-olefins having 2 to 20 carbon atoms (excluding propylene), and more preferably ethylene and butene.

The polymerization mode can be random or block.

The crystalline polyolefin (B) usually has a melt flow rate (MFR) (ASTM D1238-65T, 230°C, a load of 2.16 kg) of 8.0 g/10 minutes or less, preferably 0.05 to 5.0 g/10 minutes, and more preferably 0.1 to 4.0 g/10 minutes from the viewpoint of modulus of elasticity. When the MFR exceeds 8.0 g/10 minutes, moldability (extrusion processability) tends to be poor.

The crystalline polyolefin (B) usually has a melting point (Tm) obtained by differential scanning calorimetry (DSC) of 100°C or higher, preferably 105°C or higher, and more preferably 150 to 170°C. When a melting point is within this range, intended properties of the present invention (hardness, mechanical properties, and moldability) can be demonstrated. The value of this melting point is measured under the following conditions.

### <Measurement conditions>

Approximately 5 mg of a sample is placed in a dedicated aluminum pan, and using a differential scanning calorimeter (for example, DSCPyris1 or DSC7 manufactured by PerkinElmer, Inc.), the sample was raised from a temperature of 30°C to 200°C at 320°C/min, held at 200°C for 5 minutes, then decreased from a temperature of 200°C to 30°C at 10°C/min, held at 30°C for another 5 minutes to obtain the melting point from an endothermic curve when raised at 10°C/min. In the case where a plurality of peaks are detected during the DSC measurement, the peak temperature detected at the highest temperature side is defined as the melting point (Tm).

The crystalline polyolefin (B) serves to enhance the mobility and heat resistance of the thermoplastic elastomer composition.

The crystalline polyolefin (B) is used in an amount of usually 360 to 460 parts by mass, preferably 370 to 460 parts by mass, and more preferably 370 to 420 parts by mass, based on 100 parts by mass of the copolymer (A). The amount of the crystalline polyolefin (B) less than the above range results in a low hardness of thermoplastic elastomer composition or a molded article made therefrom, whereas the amount more than the above range results in poor moldability (extrusion processability) of the thermoplastic elastomer composition.

### <Softener (C)>

The softener (C) usable is softeners usually used for rubbers. The softener (C) may be non-bio-oil, which is oil obtained from a fossil raw material, or bio-oil, which is oil obtained from an animal-based or plant-based raw material. Examples of the softener (C) include petroleum softeners such as process oils, lubricating oils, paraffin oils, liquid paraffins, petroleum asphalts, and vaselines; coal tar softeners such as coal tars and coal tar pitches; fatty oil softeners such as castor oil, linseed oil, rapeseed oil, soybean oil, and coconut oil; tall oils; substitutes (factices); waxes such as beeswax, carnauba wax, and lanolin; fatty acids or fatty acid salts such as ricinoleic acid, palmitic acid, stearic acid, barium stearate, calcium stearate, and zinc laurate; naphthenic acid; pine oil, rosin or derivatives thereof; synthetic polymer materials such as terpene resins, petroleum resins, atactic polypropylenes, and coumarone indene resins; ester softeners such as dioctyl phthalate, dioctyl adipate, and dioctyl sebacate; microcrystalline waxes, liquid polybutadienes, modified liquid polybutadienes, liquid thiokols, and hydrocarbon synthetic lubricating oils. Of these, process oil and paraffin oil, having a solubility parameter in the range of 6.1 to 7.1 are preferable.

Of these, petroleum softeners are preferable, with paraffin oils being particularly preferable.

The softener (C) (hereinafter referred to as a softener (C1)) contained in the thermoplastic elastomer composition (I) is used in an amount of usually 80 parts by mass or more, preferably 90 parts by mass or more, and usually 140 parts by mass or less, preferably 120 parts by mass or less, and more preferably 110 parts by mass or less, based on 100 parts by mass of the copolymer (A). These upper limit and lower limit can be arbitrarily combined.

Such an amount of softener (C1) used results in excellent flowability of the composition upon preparation and molding and is less likely to deteriorate the mechanical properties of a molded article to be obtained, which also has excellent heat resistance and heat aging resistance.

### <Fatty acid-based lubricant (D)>

As the fatty acid-based lubricant (D), a known fatty acid-based lubricant that is generally and widely recognized and is compounded into plastics, can be used. For example, usable are those described in Kagaku Binran, Oyo-hen ("Handbook of Chemistry: Applied Chemistry"), revised 2nd ed. (compiled by The Chemical Society of Japan, 1973, published by MARUZEN Co., Ltd.), pp. 1037 to 1038. Specific examples thereof include a fatty acid amide.

Specific examples of the fatty acid amide include
monoamides of higher fatty acids such as stearoamide, oxystearoamide, oleylamide, erucylamide (also known as: erucic acid amide), laurylamide, palmitylamide, and behenamide;
amides of higher fatty acids such as methylolamide, methylene bis stearoamide, ethylene bis stearoamide, ethylene bis oleylamide, and ethylene bis laurylamide;
complex amides such as stearyl oleylamide, N-stearyl erucamide, and N-oleyl palmitamide; and
special fatty acid amides commercially available under product names such as Plastorosin and Plastorosin S (Fujisawa Pharmaceutical **Co.** Ltd.).

These may be used singly, or two or more may be used in combination.

Of these, preferred is a monoamide of a higher fatty acid and more preferred is an erucic acid amide.

The fatty acid-based lubricant (D) is usually used in an amount of 2 to 6 parts by mass and preferably 3 to 5 parts by mass, based on 100 parts by mass of copolymer (A). Such an amount of the fatty acid-based lubricant (D) used results in favorable mechanical properties and molding processability of the thermoplastic elastomer composition of the present invention.

### <Phenolic resin cross-linking agent (E)>

The phenolic resin cross-linking agent (E) (in the present invention, also written as the "cross-linking agent (E)") is a resole resin produced by condensing an alkyl-substituted or unsubstituted phenol with an aldehyde in an alkaline medium, preferably with formaldehyde, or also by condensing bifunctional phenolic dialcohols. The alkyl-substituted phenol is preferably phenols substituted with an alkyl group having 1 to 10 carbon atoms. Further, dimethylol phenols substituted with an alkyl group having 1 to 10 carbon atoms at the para-position or phenolic resins are preferable. The phenolic resin curable resin is typically a heat cross-linking resin and thus also called a phenolic resin cross-linking agent or phenolic resin. The cross-linking agent (E) usually serves to cross-link the copolymer (A).

Examples of the phenolic resin curable resin (phenolic resin cross-linking agent) include those represented by the following general formula [E1]. 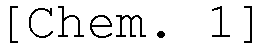 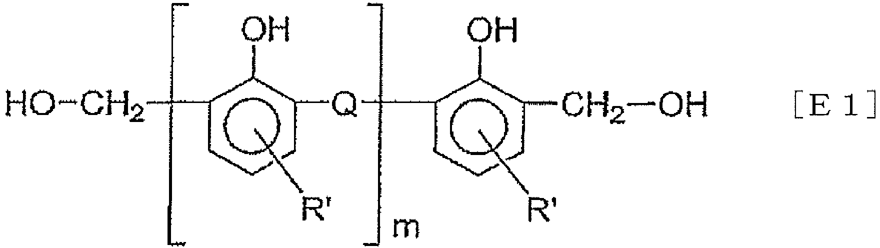 wherein, Q is a divalent group selected from the group consisting of -CH₂- and -CH₂-O-CH₂-, m is 0 or a positive integer of 1 to 20, and R' is an organic group.

It is preferable that Q is a divalent group -CH₂-O-CH₂-, m is 0 or a positive integer of 1 to 10, and R' is an organic group having less than 20 carbon atoms. It is more preferable that m is 0 or a positive integer of 1 to 5, and R' is an organic group having 4 to 12 carbon atoms.

Specific examples include alkylphenol formaldehyde resins, methylolized alkylphenol resins, and halogenated alkylphenol resins, with halogenated alkylphenol resins being preferable, and those in which a terminal hydroxyl group is brominated being further preferable. An example of the phenolic resin curable resin with a brominated terminal group is represented by the following general formula [E2]. 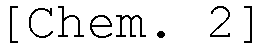 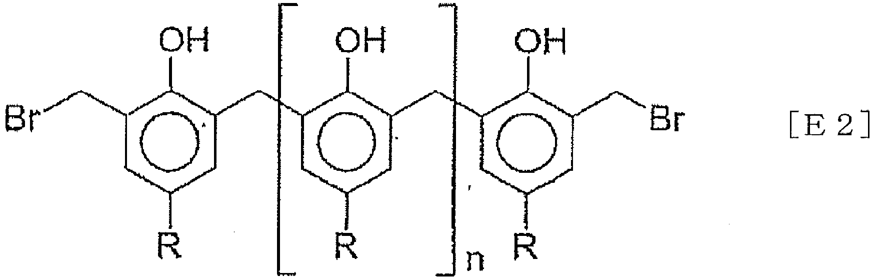 (wherein n is an integer of from 0 to 10, and R is a saturated hydrocarbon group having 1 to 15 carbon atoms.)

Product examples of the phenolic resin curable resins include TACKIROL (registered trademark) 201 (alkylphenol formaldehyde resin, manufactured by Taoka Chemical **Co.,** Ltd.), TACKIROL (registered trademark) 250-I (brominated alkylphenol formaldehyde resin having a bromination rate of 4%, manufactured by Taoka Chemical **Co.,** Ltd.), TACKIROL (registered trademark) 250-III (brominated alkylphenol formaldehyde resin, manufactured by Taoka Chemical **Co.,** Ltd.), PR-4507 (manufactured by Gun Ei Chemical Industry **Co.,** Ltd.), Vulkaresat 510E (manufactured by Hoechst), Vulkaresat 532E (manufactured by Hoechst), Vulkaresen E (manufactured by Hoechst), Vulkaresen 105E (manufactured by Hoechst), Vulkaresen 130E (manufactured by Hoechst), Vulkaresol 315E (manufactured by Hoechst), Amberol ST 137X (manufactured by Rohm&Haas), SUMILITE RESIN (registered trademark) PR-22193 (manufactured by Sumitomo Durez Co., Ltd.), Symphorm-C-100 (manufactured by Anchor Chem.), Symphorm-C-1001 (manufactured by Anchor Chem.), Tamanol (registered trademark) 531 (manufactured by Arakawa Chemicals Industries Ltd.), Schenectady SP1059 (manufactured by Schenectady Chemicals, Inc.), Schenectady SP1045 (manufactured by Schenectady Chemicals, Inc.), CRR-0803 (manufactured by U.C.C), Schenectady SP1055F (manufactured by Schenectady Chemicals, Inc., brominated alkylphenol formaldehyde resin), Schenectady SP1056 (manufactured by Schenectady Chemicals, Inc.), CRM-0803 (manufactured by Showa Union Gousei Co., Ltd.), and Vulkadur A (manufactured by Bayer). Of these, halogenated phenolic resin cross-linking agents are preferable, with brominated alkylphenol formaldehyde resins such as TACKIROL (registered trademark) 250-I, TACKIROL (registered trademark) 250-III, and Schenectady SP1055F is more preferably usable.

Specific examples of cross-linking of vulcanized thermoplastic rubber with a phenolic resin are described in the US. Pat. No. 4,311,628 specification, U.S. Pat. No. 2,972,600 specification, and U.S. Pat. No. 3,287,440 specification, and these techniques can also be used in the present invention.

The U.S. Pat. No. 4,311,628 specification discloses a phenolic curative system consisting of a phenolic curing resin and a cure activator. A basic component of the system is a phenolic resin cross-linking agent produced by condensing, in alkaline medium, a substituted phenol (for example, halogen-substituted phenol, and C₁-C₂ alkyl-substituted phenol) or an unsubstituted phenol with aldehyde, preferably formaldehyde, or by condensing bifunctional phenolic dialcohols (preferably dimethylol phenols substituted with a C₅-C₁₀ alkyl group at the para-position). A halogenated alkyl-substituted phenolic resin cross-linking agent produced by halogenating an alkyl-substituted phenolic resin cross-linking agent is particularly suitable. A phenolic resin cross-linking agent including a methylol phenolic curing resin, a halogen donor and a metal compound is particularly recommended, and details thereof are described in US Pat. No. 3,287,440 and 3,709,840 specifications. A non-halogenated phenolic resin cross-linking agent is used simultaneously with a halogen donor, and preferably together with a hydrogen halide scavenger. Usually, a halogenated phenolic resin cross-linking agent, and preferably a brominated phenolic resin cross-linking agent containing 2 to 10 mass% of bromine, do not require a halogen donor but are used simultaneously with a hydrogen halide scavenger such as a metal oxide such as an iron oxide, a titanium oxide, magnesium oxide, a magnesium silicate, silicon dioxide and zinc oxide, preferably with zinc oxide. These hydrogen halide scavengers such as zinc oxide are used usually in 1 to 20 parts by mass based on 100 parts by mass of the phenolic resin cross-linking agent. These scavengers, when present, accelerate the cross-linking activity of the phenolic resin cross-linking agent but when the copolymer (A) is not easily cross-linked with the phenolic resin cross-linking agent (E), a halogen donor and zinc oxide are desirably used together. A production method of halogenated phenolic curing resins and their use in a vulcanizing system using zinc oxide are described in the U.S. Pat. Nos. 2,972,600 and 3,093,613 specifications, the disclosures of which are incorporated herein by reference together with the disclosures of U.S. Pat. Nos. 3,287,440 and 3,709,840 specifications. Examples of the suitable halogen donor include halogen donating polymers such as stannous chloride, ferric chloride, or chlorinated paraffin, chlorinated polyethylene, chlorosulfonated polyethylene, and polychlorobutadiene (neoprene rubber). Suitable phenolic resin cross-linking agents and brominated phenolic resin cross-linking agents are commercially available and, for example, these cross-linking agents can be purchased from Schenectady Chemicals, Inc. under product names "SP-1045", "CRJ-352", "SP-1055F" and "SP-1056". Similar phenolic resin cross-linking agents having the equivalent activity can also be purchased from other suppliers.

The phenolic resin cross-linking agent (E) hardly produces decomposed products and is thus a preferable cross-linking agent considering the fogging prevention.

In the present invention, when heat treatment is performed in the presence of the cross-linking agent (E), auxiliary agents, such as sulfur, peroxy cross-linking auxiliary agents such as p-quinone dioxime, p,p'-dibenzoylquinone dioxime, N-methyl-N,4-dinitrosoaniline, nitrosobenzene, diphenyl guanidine, and trimethylolpropane-N,N'-m-phenylenedimaleimide, divinylbenzene, triallyl cyanurate, polyfunctional methacrylate monomers such as ethylene glycol dimethacrylate, diethylene glycol dimethacrylate, polyethylene glycol dimethacrylate, trimethylolpropane trimethacrylate, and allyl methacrylate, and polyfunctional vinyl monomers such as vinyl butyrate and vinyl stearate, can be compounded.

Further, a decomposition accelerator can be used to accelerate the decomposition of the cross-linking agent (E). Examples of the decomposition accelerator include tertiary amines such as triethylamine, tributylamine, 2,4,6-tri(dimethylamino)phenol; aluminium, cobalt, vanadium, copper, calcium, zirconium, manganese, magnesium, lead, mercury, and naphthenates from naphthenic acid and various metals (for example, Pb, Co, Mn, Ca, Cu, Ni, Fe, Zn, and rare earths).

The cross-linking agent (E) is used in a proportion of usually 2 to 9 parts by mass, and preferably 2.5 to 8.5 parts by mass, based on 100 parts by mass of the copolymer (A). Such an amount of the cross-linking agent (E) used results in favorable mechanical properties and molding processability of the thermoplastic elastomer composition of the present invention. Further, the cross-linking degree of the copolymer (A) in the present invention is not particularly limited and is adjustable by changing the amount of the cross-linking agent (E) within the range of the present invention.

### <Optional additives>

The composition of the present invention may include additives other than the components described above without impairing the effect of the present invention.

Examples of the additives include colorants, antioxidants, inorganic fillers, reinforcing agents, antiaging agents (stabilizers), processing aids, activators, hygroscopic agents, foaming agents, foaming aids, cross-linking aids described above, and decomposition accelerator described above.

These additives may respectively be used singly, or two or more may be used in combination.

In the case of including optional additives, the amount of additives such as stabilizers (antioxidant, antiaging agent) and processing aids added is, for example, about 0.01 to 0.80 parts by mass, and preferably about 0.10 to 0.50 parts by mass, based on 100 parts by mass of the copolymer (A). The amount of for example, colorants, inorganic fillers, reinforcing agents, activators, hygroscopic agents, foaming agents, foaming aids, cross-linking aids described above, decomposition accelerator described above are not particularly limited, but each of the additives, when included, is usually 0.01 to 10 parts by mass, and preferably 1 to 8 parts by mass, based on 100 parts by mass of the copolymer (A).

### [Thermoplastic elastomer composition (I) and production method thereof]

The thermoplastic elastomer composition (I) according to the present invention comprises
the copolymer (A) cross-linked with the phenolic resin cross-linking agent (E), and further comprises
360 to 460 parts by mass of the crystalline polyolefin (B),
80 parts by mass or more of the softener (C1), and
2 to 6 parts by mass of the fatty acid-based lubricant (D), with the proviso that the amount of the copolymer (A) is 100 parts by mass.

The thermoplastic elastomer composition (I) according to the present invention has a 1/2 crystallization time at 120°C of 200 seconds or less, preferably 190 seconds or less, and more preferably 180 seconds or less, and the lower limit may be, for example, 60 seconds. In a composition having a 1/2 crystallization time at 120°C of more than 200 seconds, the crystalline polyolefin (B) is less likely to be crystallized in a molded article containing the composition and an enlarged softener penetration path in the molded article results. As a result, retentivity of the softener is reduced and poor heat aging resistance results.

The 1/2 crystallization time is, when an area between a DSC calorimetric curve and a baseline in an isothermal crystallization process is taken as a total amount of heat, a time at which the amount of heat reached 50% from the start of isothermal crystallization [see Shin Kobunshi Jikken Koza (in Japanese; New Polymer Experiment Course 8): Physical Properties of Polymers (published by Kyoritsu Shuppan Co., Ltd.)]. The 1/2 crystallization time is measured by a method using a differential scanning calorimeter (DSC) as described later.

The 1/2 crystallization time of composition (I) at 120°C can be adjusted by components contained in the composition, for example, the type and amount of the cross-linking agent, or whether or not the ethylene/α-olefin/nonconjugated polyene copolymer used as a raw material for the composition (I) is an oil-extended product, and when the ethylene/α-olefin/nonconjugated polyene copolymer is an oil-extended product, the 1/2 crystallization time can be adjusted by the amount of oil extended, for example. Since favorable heat aging resistance and extrusion processability of composition (I) result, the ethylene/α-olefin/nonconjugated polyene copolymer (A) is preferably an oil-extended product, and the amount of oil extended is preferably 80 phr or more and more preferably 100 phr or more.

The polyolefin component contained in the thermoplastic elastomer composition (I) according to the present invention has a maximum spherulite size of 8 µm or less, preferably 7 µm or less, and more preferably 6 µm or less. The maximum spherulite size can be, for example, 2 µm or more or 3 µm or more. A composition in which the maximum spherulite size of the polyolefin component exceeds 8 µm results in coarsening of a molded article containing the composition, resulting in enlargement of a softener penetration path in the molded article. As a result, the retentivity of the softener is reduced and poor heat aging resistance results. Also, the spherulites of the polyolefin component become enlarged, which causes convex and concave portions to be developed on a surface of a molded article, resulting in poor moldability, specifically extrusion processability.

The polyolefin component contained in the thermoplastic elastomer composition (I) according to the present invention has a minimum spherulite size of preferably 1 to 4 µm and more preferably in the range of 2 to 3 µm.

The maximum and minimum spherulite sizes of the polyolefin component of composition (I) can be adjusted by, for example, components contained in the composition, for example, the type and amount of the ethylene/α-olefin/nonconjugated polyene copolymer, the amount of oil extended in the case of an oil-extended product, the type and amount of crystalline polyolefin, the type and amount of cross-linking agent, the type and amount of softener, and an injection method. More specifically, the spherulite size is controlled by an injection method of the softener, and the ethylene/α-olefin/nonconjugated polyene copolymer is dispersed in the softener to reduce the softener content in the crystalline polyolefin, making it possible to inhibit the crystalline polyolefin from being crystallized and to control the spherulite size.

The above maximum and minimum spherulite sizes are measured by the method employed in Examples described later.

The thermoplastic elastomer composition (I) according to the present invention can be obtained by a method including the following step (β).

Step (β): A mixture (α) including the copolymer (A) and the softener (C1), 360 to 460 parts by mass of the crystalline polyolefin (B), 2 to 9 parts by mass of the phenolic resin-based cross-linking agent (E), 2 to 6 parts by mass of the fatty acid-based lubricant (D), and optionally the softener (C1), are mixed, based on 100 parts by mass of the copolymer (A). The total amount of the softener (C1) contained in the mixture (α) and the softener (C1) optionally mixed in the step (β) is 80 parts by mass or more.

A mass fraction of the softener (C1) contained in the mixture (α) relative to the total of the softener (C1) contained in the mixture (α) and the softener (C1) optionally mixed in the step (β) is usually 60 to 100% by mass and preferably 95 to 100% by mass. When the mass fraction is within this range, the 1/2 crystallization time at 120°C of the thermoplastic elastomer composition (I) and the maximum spherulite size of the olefin component can stay within desired ranges, thereby enabling both heat aging resistance and extrusion processability to be achieved.

The mixture (α) may be a commercially available copolymer (A) which was oil-extended with the softener (C1).

Also, prior to the step (β), the step (α) of kneading the copolymer (A) and the softener (C1) to prepare the mixture (α) may be carried out.

In one preferred embodiment of the method for producing a thermoplastic elastomer composition (I) according to the present invention, the step (β) preferably includes the step of dynamically heat-treating the copolymer (A), the crystalline polyolefin (B), the softener (C1), and the fatty acid-based lubricant (D) in the presence of the phenol resin-based cross-linking agent (E).

The dynamic heat treatment is preferably carried out in a non-open apparatus under an inert gas atmosphere such as nitrogen and a carbon dioxide gas. The temperature for heat treatment is usually from the melting point of the copolymer (A) to 300°C, preferably 150 to 280°C, and more preferably 170 to 270°C. The kneading time is usually 1 to 20 minutes, and preferably 1 to 10 minutes.

The dynamic heat treatment of the mixture can be carried out by using a conventionally known kneader. Examples of the kneader include a mixing roll, an intensive mixer (for example, a Banbury mixer, a pressure kneader), and a single-screw or twin-screw extruder, and a non-open type kneader is preferable, and a twin-screw extruder is particularly preferable.

In the thermoplastic elastomer composition (I) according to the present invention, the above-described copolymer (A) and cross-linking agent (E) are used as raw materials, so that in a heat-treated product obtained by having dynamically heat-treated the raw materials containing these, the copolymer (A) is usually cross-linked.

When producing the thermoplastic elastomer composition (I) according to the present invention, the copolymer (A), the cross-linking agent (E), and at least a portion of the crystalline polyolefin (B) may be dynamically heat-treated, however, the total amount of the crystalline polyolefin (B) may be subjected to dynamic heat treatment, and the softener (C1), the fatty acid-based lubricant (D), and an arbitrary additive may be dynamically heat-treated together with at least a portion of each of the copolymer (A), the cross-linking agent (E), and the crystalline polyolefin (B), or may be mixed with the heat-treated product, or may undergo the same treatment using both of these (i.e., the portions is dynamically heat-treated and the rest is mixed with the heat-treated product).

As the thermoplastic elastomer composition (I) according to the present invention, a composition containing paraffin oil as the softener (C1) is preferable.

### [Molded article and applications thereof]

The molded article according to the present invention is characterized by comprising the thermoplastic elastomer composition (I) according to the present invention.

The molded article according to the present invention can be formed from the thermoplastic elastomer composition (I) according to the present invention. A conventionally known molding method is applicable as the molding method.

The molded article according to the present invention has excellent sliding performance and processability.

The laminate of the present invention is preferably applicable to articles such as window frame seals and building gaskets in addition to glass run channel.

### [Laminate and applications thereof]

The laminate according to the present invention is characterized by being formed by laminating: a layer comprising the thermoplastic elastomer composition (I) according to the present invention (that is**,** the layer of the molded article according to the present invention); and a layer comprising a soft material.

Examples of the soft materials include soft materials having Type A hardness of 50 to 95, preferably 50 to 85. The Type A hardness of the soft material is measured according to a method in accordance with ISO 7619, which will be described later.

The soft material is not particularly limited as long as it has Type A hardness of 50 to 95, and an example thereof can include a thermoplastic elastomer (hereinafter also referred to as a "thermoplastic elastomer composition (II)"). Commercially available products such as Milastomer C700BM, W600B, and TS7000N can be used as the soft materials according to the present invention.

Examples of the thermoplastic elastomer composition (II) include preferably the thermoplastic elastomer composition (I) according to the present invention, those in which the phenolic resin cross-linking agent (E) is replaced with other cross-linking agents in the thermoplastic elastomer composition (I) according to the present invention, and those of these thermoplastic elastomer compositions having different proportion ratios of the ingredients. The thermoplastic elastomer composition (II) including the phenolic resin cross-linking agent (E) as a cross-linking agent is preferable.

The thermoplastic elastomer composition (II) further preferably includes those produced by dynamically heat treating, in the presence of a cross-linking agent, 10 to 60 parts by mass of a polyolefin resin (X), 30 to 70 parts by mass of an ethylene/α-olefin/nonconjugated polyene copolymer rubber (or a rubber component to which other rubbers such as polyisobutylene, butyl rubbers, and propylene/ethylene copolymers are added) (Y), and 5 to 50 parts by mass of an oil softener (Z) [the total of (X), (Y), and (Z) is 100 parts by mass]. The components (X), (Y), and (Z) herein respectively mean the same as (B), (A), and (C) components used in the thermoplastic elastomer composition (I) of the present invention.

The mass fraction (W_{c}) of the softener in the thermoplastic elastomer composition used in the present invention is defined as follows. That is, a mass proportion which is expressed as a percentage, of the softener (C) relative to the total mass of the ethylene/α-olefin/nonconjugated polyene copolymer (A), the crystalline polyolefin (B), the softener (C) and the cross-linking agent (E') (the cross-linking agent (E') is a concept that also includes the phenolic resin-based cross-linking agent (E)) in the thermoplastic elastomer composition used in the present invention, is defined as W_{c}. Further, the W_{c} in the thermoplastic elastomer composition (I) is expressed as W_{1c}, and the W_{c} in the thermoplastic elastomer composition (II) is expressed as W_{2c}.

The thermoplastic elastomer composition (II) comprises a softener (C2) having a solubility parameter of 6.6 to 7.1.

The mass fraction (W_{2c}) of the softener (C2) in the thermoplastic elastomer composition (II) is preferably 30 to 60% by mass and more preferably 33 to 55% by mass.

In this laminate, the ratio (W_{1c}/W_{2c}) of the mass fraction (W_{1c}) of the softener (C1) relative to the total of the thermoplastic elastomer composition (I) to the mass fraction (W_{2c}) of the softener (C2) relative to the total of the thermoplastic elastomer composition (II) is preferably 0.50 or less and more preferably 0.40 or less. When the ratio (W_{1c}/W_{2c}) is within the above range, the softener (oil) migration reduces from the layer including the thermoplastic elastomer composition (I) to the layer including the soft material (thermoplastic elastomer composition (II)), and the sliding performance of the layer including the thermoplastic elastomer composition (I) is not hindered. The lower limit of the W_{1c}/W_{2c} is not particularly limited and preferably 0.30, and more preferably 0.40.

The laminate of the present invention may further have other layers in addition to the above two layers.

The thickness of the layer including the thermoplastic elastomer composition (I), although depending on the laminate application, is for example, 30 µm to 1000 µm, and the thickness of the layer including the soft material (thermoplastic elastomer composition (II)) is, for example, 0.1 mm to 3.0 mm.

The thermoplastic elastomer composition (I) and the molded article thereof, according to the present invention have excellent heat aging resistance, appropriate hardness, and excellent mechanical strength, so that the laminate according to the present invention using the molded article is particularly useful for automobile sealing members (glass run channels), and is considered to enable reduction of low-grade noises (cueing noise, squealing noise, or rattling noise) that occur when the bottom surface of the glass run channel comes into strong contact with glass.

The laminate of the present invention is preferably applicable to articles such as window frame seals and building gaskets in addition to glass run channel.

### Examples

Next, the present invention will be described in more detail by giving Examples, which should not be construed as limiting the present invention.

### [Measurement or evaluation method]

### <Ingredients>

Properties of the ingredients were measured by the following methods.

### (Proportion of each structural unit in the ethylene/α-olefin/nonconjugated polyene copolymer)

¹³C-NMR was used to measure a proportion of the ethylene-derived structural unit, a proportion of α-olefin-derived structural unit, and a proportion of the nonconjugated polyene-derived structural unit included in the ethylene/α-olefin/nonconjugated polyene copolymer.

The measurement conditions in ¹³C-NMR are as follows: The measured value was obtained by measuring the ¹³C-NMR spectrum of the copolymer by using a nuclear magnetic resonance apparatus, Model ECX400P (manufactured by JEOL Ltd.) at a measurement temperature: 120°C in a measuring solvent: orthodicholorbenzene/deuterated benzene = 4/1 with a cumulative number: 8000.

### (Number-average molecular weight and weight-average molecular weight)

The number-average molecular weight and weight-average molecular weight of the ethylene/α-olefin/nonconjugated polyene copolymer were measured by gel permeation chromatography. The conditions are as follows.
Column: TSKgel GMH6-HT × 2 + TSKgel GMH6-HTL × 2 (Both have dimensions of 7.5 mm ID × 30 cm, which was manufactured by Tosoh Corporation.)
Column temperature: 140°C
Mobile phase: o-Dichlorobenzene (containing 0.025% BHT)
Detector: Differential refractometer
Flow rate: 1.0 mL/min
Sample concentration: 0.1% (w/v)
Injection volume: 0.4 mL
Sampling time interval: 0.5 seconds
Column calibration: Monodisperse polystyrenes (manufactured by Tosoh Corporation); #3 std set
Molecular weight conversion: Conversion in terms of PS/standard conversion method

### (Intrinsic viscosity [η])

The intrinsic viscosity [η] of the ethylene/α-olefin/nonconjugated polyene copolymer was measured using a fully automatic intrinsic viscometer manufactured by Rigosha & Co., Ltd., at a temperature of 135°C and in decalin as the measurement solvent.

### (Solubility parameter)

The solubility parameter of the softener was calculated using the Fedors parameters calculated using a Synthia module of Materials Studio.

### <Thermoplastic elastomer composition>

The thermoplastic elastomer composition was measured or evaluated by the following method.

### (MFR)

Pellet of the thermoplastic elastomer composition was measured for a melt flow rate (MFR) in accordance with JIS K7112 using a melt indexer (manufactured by Toyo Seiki Seisaku-sho, Ltd.) at 230°C under a load of 10 kg.

### (Type A hardness)

Using a 100-t electric heating automatic press machine (manufactured by Shinsei Shoji Co., Ltd.), the soft material was press molded at 230°C for 6 minutes, and then cooled and pressed at room temperature for 5 minutes to fabricate a press sheet with a thickness of 2 mm. The sheet was tested in accordance with ISO 7619 using an A-type meter to read out a scale immediately after a press needle contact. When the measured Type A hardness was 50 to 95, the soft material was determined to be the soft material according to the present invention.

### (Type D hardness)

A 20 cm × 20 cm × 2 mm sheet sample prepared from pellets of the thermoplastic elastomer composition using a 50-t press machine was used as a test sample, and its hardness was measured using a Durometer Type D hardness tester in accordance with JIS K 6252-3.

### (Tensile properties)

A sheet sample of 20 cm × 20 cm × 2 mm adjusted from the pellet of the thermoplastic elastomer composition using a 50-t press machine was used as a test sample and tested for a tensile in accordance with JIS 6251 under conditions of 25°C and a tensile rate of 500 mm/min to measure M100 (stress in 100% elongation), TB (tensile strength at break), and EB (tensile elongation at break).

### (1/2 crystallization time)

Using a differential scanning calorimeter (DSC), the 1/2 crystallization time was measured when a pellet of the thermoplastic elastomer composition was raised to a temperature of 230°C at a rate of temperature rise of 500°C/min in a nitrogen atmosphere, held for 10 minutes, and then cooled to 120°C at a rate of cooling of 500°C/min.

### (Maximum spherulite size and minimum spherulite size)

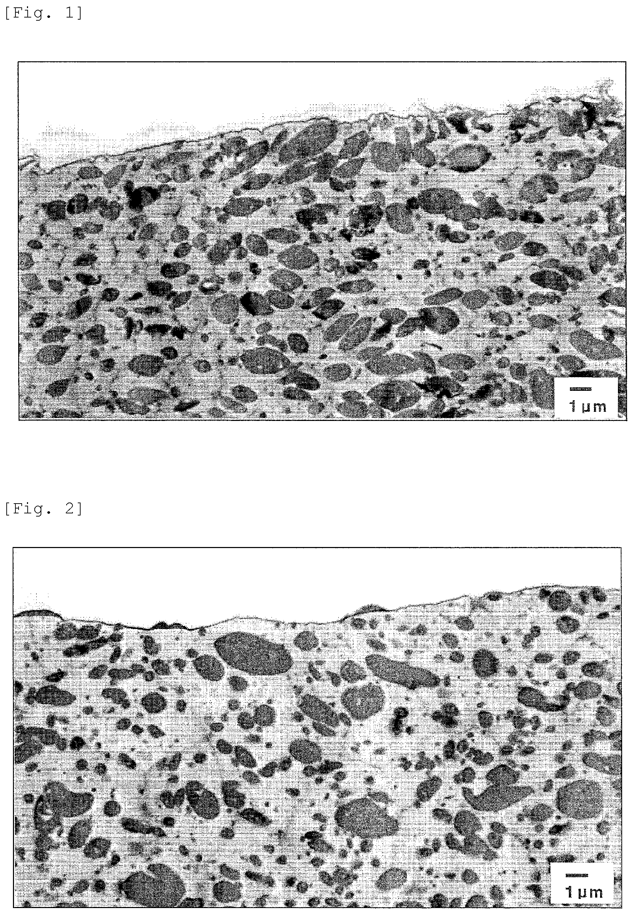

The polyolefin component in the laminate produced in Examples, for example, was stained with RuO₄, a thin piece cut in the TD direction underwent carbon deposition, and five locations randomly selected in the laminate were observed with a transmission electron microscope (TEM) at a magnification of 10,000 times, and the largest and smallest diameters of spherulites of the polyolefin component were measured within the range observed, and average values of thereof, respectively, were taken as the maximum spherulite size and minimum spherulite size. Also, a portion surrounded by the boundary line of the white area (crystalline resin component) which was not stained with a dye was defined as one spherulite. It is to be noted that when a spherulite was not circular (i.e., elliptical or polygonal), the maximum value and minimum value as measured in the horizontal or vertical direction of the cut surface (i.e., Figure 1 and Figure 2) were taken as the maximum spherulite size and minimum spherulite size.

### (Heat aging resistance)

The laminates produced in Examples, for example, were left to stand in air at 85°C for 168 hours, and for each of these laminates, the surface condition of the laminate on the sliding layer (thermoplastic elastomer composition (I)) side was visually confirmed and by the touch of a finger, and compared with the surface condition before having been left to stand. The symbols in Tables 2 and 3 have the following meanings.
O: Surface conditions remained unchanged
Δ: Surface gloss was identified but no stickiness was caused
X: Surface gloss was identified and stickiness was caused

### (Extrusion processability)

The extrusion processability of the thermoplastic elastomer composition was visually evaluated in terms of an appearance state when laminated and extrusion-molded together with the soft material. Those without problems were rated as fair, and those with abnormalities such as a rough surface were rated as poor.

### [Ingredients]

The following ethylene/propylene/diene copolymers (hereinafter referred to as "EPDM") were used as the ethylene/α-olefin/nonconjugated polyene copolymers.
EPDM-1 Product name: Mitsui EPT (trademark) X-3042E (manufactured by Mitsui Chemicals, Inc.)
EPDM-2 (trademark) KEP902NP (manufactured by Kumho Polychem Co., Ltd.)
EPDM-3 Product name: Mitsui EPT (trademark) 3072EPM (manufactured by Mitsui Chemicals, Inc.)
EPDM-4 Product name: Mitsui EPT (trademark) 4100E (manufactured by Mitsui Chemicals, Inc.)

The physical properties of the EPDMs contained in the above EPDM-1 to EPDM-4 are shown in Table 1.

EPDM-1 to EPDM-4 are so-called oil-extended products in which EPDM was compounded with a softener, and in Table 1, the content of the softener relative to 100 parts by mass of EPDM is shown as the "amount of oil extended."

### [Table 1]

**(Table 1)**

| | | EPDM-1 | EPDM-2 | EPDM-3 | EPDM-4 |
|---|---|---|---|---|---|
| EPDM physical properties | | | | | |
| Ethylene content | % by mass | 67.0 | 67.0 | 64.0 | 57.0 |
| Diene content | % by mass | 4.3 | 4.5 | 5.4 | 7.3 |
| Number-average molecular weight | - | 131,000 | 238,000 | 115,000 | 140,000 |
| Weight-average molecular weight | - | 353,000 | 638,000 | 284,000 | 471,000 |
| Intrinsic viscosity [η] | dL/g | 4.3 | 5.0 | 3.4 | 4.1 |
| Amount of oil extended | Parts by mass | 120 | 100 | 40 | 50 |

As the crystalline polyolefins (B), the following propylene homopolymers PP-1 to PP-3, which were produced by known techniques, were used.
- PP-1: Propylene homopolymer with MFR (230°C, 2.16 kg load) = 0.5 g/10 min and a melting point 160°C
- PP-2: Propylene homopolymer with MFR (230°C, 2.16 kg load) = 2.0 g/10 minutes and a melting point 160°C
- PP-3: Propylene homopolymer with MFR (230°C, 2.16 kg load) = 9.0 g/10 minutes and a melting point 160°C

Further, the following ingredients were used.
- Softener: PW90 (product name, manufactured by Idemitsu Kosan Co., Ltd.) (paraffin oil)
- Lubricant: erucic acid amide
- Cross-linking agent: bromated alkylphenol formaldehyde resin (product name, SP-1055F, manufactured by Schenectady Chemicals, Inc.)
- Colorant: carbon black masterbatch (manufactured by DIC Corporation, F23287MM)
- Antioxidant: a mixture of a phenolic antioxidant (Irganox 1010 (manufactured by BASF Japan Ltd.)), a benzotriazole UV absorber (Tinuvin 326 (manufactured by BASF Japan Ltd.), and a hindered amine (HALS) weather stabilizer (Tinuvin 770

### (manufactured by BASF Japan Ltd.)

### [Example 1]

### (Production of thermoplastic elastomer composition-1)

The EPDM-1, PP-1, softener, lubricant, cross-linking agent, colorant and antioxidant were introduced into a twinscrew extruder (HYPER KTX 46, manufactured by Kobe Steel, Ltd.) in the proportions shown in Table 2, and melt-kneaded under the conditions of cylinder temperature: 50 to 250°C (i.e., the temperature of the dynamic heat treatment described in the above-described section "Thermoplastic elastomer composition (I) and production method thereof" was 250°C), die temperature: 200°C, screw rotation speed: 550 pm, and extrusion rate: 40 kg/hour to obtain pellets of a thermoplastic elastomer composition (hereinafter also referred to as a "thermoplastic elastomer composition-1 "). The results of evaluation are shown in Table 2.

### (Production of laminate)

As a material for a layer containing the soft material (thermoplastic elastomer composition (II)), a thermoplastic elastomer composition having a mass fraction (W_{2c}) of the softener (C2) of 42% by mass of (TPV-1, type A hardness 70) or 50% by mass (TPV-2, type A hardness 70) was prepared.

Specifically, 24 parts by mass of polyolefin resin (the PP-1), 37 parts by mass of the ethylene/α-olefin/nonconjugated polyene copolymer (the EPDM-1), and 33 parts by mass of the softener (C2) (solubility parameter = 7.1) were dynamically heat-treated in the presence of 6 parts by mass of cross-linking agent (the brominated alkylphenol formaldehyde resin) under the same conditions as those used in the production of thermoplastic elastomer composition-1 described above, to produce a thermoplastic elastomer composition (hereinafter referred to as "TPV-1"). Also, 19 parts by mass of the polyolefin resin (the PP1), 33 parts by mass of the ethylene/α-olefin/nonconjugated polyene copolymer (the EPDM-1), and 42 parts by mass of the softener (C2) (solubility parameter = 7.1) were dynamically heat-treated in the presence of 6 parts by mass of cross-linking agent (the brominated alkylphenol formaldehyde resin) under the same conditions as those used in the production of the above-described thermoplastic elastomer composition-1, to produce a thermoplastic elastomer composition (hereinafter referred to as "TPV-2").

Using a co-extruder, a laminate (a sliding layer thickness 200 to 250 µm, total laminate thickness 2 mm) of the layer including the soft material (the above TPV-1 or TPV-2) laminated on the sliding layer including the thermoplastic elastomer composition-1 was made.

The evaluation results of the heat aging resistance of this laminate as the test sample are shown in Table 2.

### [Examples 2 to 8 and Comparative Examples 1 to 6]

Pellets of the thermoplastic elastomer compositions were obtained and further the laminates were made in the same manner as in Example 1 except that the kind and amount of the ingredients were changed as shown in Table 1. The evaluation results are shown in Tables 2 and 3.

### [Table 2]

**(Table 2)**

| | | | Example 1 | Example 2 | Example 3 | Example 5 | Example 6 | Example 7 | Example 8 |
|---|---|---|---|---|---|---|---|---|---|
| EPDM-1 | | Parts by mass | 100 | | 100 | 100 | 100 | 100 | 100 |
| EPDM-2 | | Parts by mass | | 100 | | | | | |
| EPDM-3 | | Parts by mass | | | | | | | |
| EPDM-4 | | Parts by mass | | | | | | | |
| Softener | Amount of oil extended in EPDM | Parts by mass | 120 | 100 | 120 | 120 | 120 | 120 | 120 |
| | Injection upon kneading | Parts by mass | | | | | | | |
| PP-1 | | Parts by mass | 385 | 385 | 360 | 460 | | 385 | 385 |
| PP-2 | | Parts by mass | | | | | 385 | | |
| PP-3 | | Parts by mass | | | | | | | |
| Cross-linking agent | | Parts by mass | 8 | 8 | 8 | 8 | 8 | 3 | 8 |
| Lubricant | | Parts by mass | 5 | 5 | 5 | 5 | 5 | 5 | 3 |
| Antioxidant | | Parts by mass | 0.4 | 0.4 | 0.4 | 0.4 | 0.4 | 0.4 | 0.4 |
| Coloring agent (carbon) | | Parts by mass | 5 | 5 | 5 | 5 | 5 | 5 | 5 |
| 1/2 crystallization time | 120°C | Second | 110 | 90 | 180 | 80 | 92 | 160 | 130 |
| Spherulite size | Maximum | µm | 3 | 3 | 5 | 3 | 4 | 6 | 3 |
| | Minimum | µm | 2 | 2 | 3 | 2 | 3 | 3 | 2 |
| MFR | 230°Cx10kgf | g/10 minutes | 55 | 50 | 45 | 53 | 56 | 55 | 55 |
| Type D hardness | After 5 seconds | - | 50 | 51 | 49 | 54 | 50 | 50 | 50 |
| Tensile test | M100 | MPa | 12.8 | 13.0 | 12.6 | 13.5 | 12.7 | 12.0 | 12.8 |
| | TB | MPa | 26.3 | 27.8 | 25.8 | 28.5 | 26.0 | 25.9 | 26.1 |
| | EB | % | 700 | 750 | 680 | 790 | 710 | 700 | 710 |
| Heat aging resistance (85°Cx 168hr) | TPV-1 | - | O | O | O | O | O | O | O |
| | | W1c/W2c | 0.5 | 0.4 | 0.5 | 0.4 | 0.5 | 0.5 | 0.5 |
| | TPV-2 | - | O | O | O | O | O | O | O |
| | | W1c/W2c | 0.4 | 0.3 | 0.4 | 0.3 | 0.4 | 0.4 | 0.4 |
| Extrusion processability | | | Fair | Fair | Fair | Fair | Fair | Fair | Fair |

### [Table 3]

**(Table 3)**

| | | | Comparative Example 1 | Comparative Example 2 | Comparative Example 3 | Comparative Example 4 | Comparative Example 5 | Comparative Example 6 |
|---|---|---|---|---|---|---|---|---|
| EPDM-1 | | Parts by mass | | | | 100 | 100 | 100 |
| EPDM-2 | | Parts by mass | | | | | | |
| EPDM-3 | | Parts by mass | 100 | | | | | |
| EPDM-4 | | Parts by mass | | 100 | 100 | | | |
| Softener | Amount of oil extended in EPDM | Parts by mass | 40 | 50 | 50 | 120 | 120 | 120 |
| | Injection upon kneading | Parts by mass | 60 | 50 | | | | |
| PP-1 | | Parts by mass | 385 | 385 | 385 | | 385 | 385 |
| PP-2 | | Parts by mass | | | | | | |
| PP-3 | | Parts by mass | | | | 385 | | |
| Cross-linking agent | | Parts by mass | 8 | 8 | 8 | 8 | | 10 |
| Lubricant | | Parts by mass | 5 | 5 | 5 | 5 | 5 | 5 |
| Antioxidant | | Parts by mass | 0.4 | 0.4 | 0.4 | 0.4 | 0.4 | 0.4 |
| Coloring agent (carbon) | | Parts by mass | 5 | 5 | 5 | 5 | 5 | 5 |
| 1/2 crystallization time | 120°C | Second | 252 | 210 | 200 | 120 | 280 | 90 |
| Spherulite size | Maximum | µm | 8 | 7 | 5 | 5 | 10 | 12 |
| | Minimum | µm | 6 | 6 | 4 | 2 | 10 | 10 |
| MFR | 230°C×10kgf | g/10 minutes | 38 | 50 | 28 | 38 | 45 | 50 |
| Type D hardness | After 5 seconds | - | 50 | 50 | 58 | 50 | 48 | 50 |
| Tensile test | M100 | MPa | 12.5 | 12.6 | 13.1 | 11 | 11 | 12.8 |
| | TB | MPa | 24.4 | 25.8 | 27.5 | 21 | 21 | 20 |
| | EB | % | 740 | 730 | 600 | 680 | 580 | 550 |
| Heat aging resistance (85°C×168hr) | TPV-1 | - | Δ | 0 | 0 | 0 | X | 0 |
| | | W1c/W2c | 0.4 | 0.4 | 0.2 | 0.5 | 0.5 | 0.5 |
| | TPV-2 | - | X | Δ | O | O | X | 0 |
| | | W1c/W2c | 0.3 | 0.3 | 0.2 | 0.4 | 0.4 | 0.4 |
| Extrusion processability | | | Fair | Fair | Poor | Poor | Poor | Poor |

## Claims

1. A thermoplastic elastomer composition (I) comprising a cross-linked product of an ethylene/α-olefin/nonconjugated polyene copolymer (A), wherein the α-olefin has 3 or more carbon atoms, satisfying the following requirements (a1) to (a4), with a phenolic resin-based cross-linking agent (E), and comprising
360 to 460 parts by mass of a crystalline polyolefin (B) having a melt flow rate of 8.0 g/10 min or less as measured under conditions of 230°C and a load of 2.16 kg;
2 to 6 parts by mass of a fatty acid-based lubricant (D), and
80 parts by mass or more of a softener (C1), based on 100 parts by mass of the copolymer (A);
wherein the thermoplastic elastomer composition (I) has a 1/2 crystallization time at 120°C of 200 seconds or less, and
a polyolefin component comprised in the thermoplastic elastomer composition (I) has a maximum spherulite size in a range of 8 µm or less:
(a1) a weight-average molecular weight is 350,000 or more;
(a2) an intrinsic viscosity [η] is 4.0 dL/g or more;
(a3) an ethylene content is 57.0% by mass or more; and
(a4) a content of the nonconjugated polyene is 4.0% by mass or more.

2. The thermoplastic elastomer composition (I) according to claim 1, wherein the crystalline polyolefin (B) is a propylene homopolymer, and the crystalline propylene (B) has a melting point of 150 to 170°C as measured by differential scanning calorimetry.

3. A molded article comprising the thermoplastic elastomer composition (I) according to claims 1 or 2.

4. A laminate formed by laminating:
a layer comprising the thermoplastic elastomer composition (I) according to claims 1 or 2; and
a layer comprising a soft material having Type A hardness of 50 to 95 measured in accordance with ISO 7619.

5. The laminate according to claim 4, wherein the soft material has Type A hardness of 50 to 85.

6. The laminate according to claim 4, wherein the soft material comprises a thermoplastic elastomer composition (II) comprising a thermoplastic elastomer,
the thermoplastic elastomer composition (II) comprises a softener (C2) having a solubility parameter of 6.6 to 7.1, and
a mass fraction (W_{2C}) of the softener (C2) relative to a total of the thermoplastic elastomer composition (II) is 30 to 60% by mass.

7. The laminate according to claim 6, wherein a ratio (W_{1C}/W_{2C}) of a mass fraction (W_{1C}) of the softener (C1) relative to a total of the thermoplastic elastomer composition (I) to the W_{2C} is 0.5 or less.

8. The molded article according to claim 3, which is a window frame seal, a glass run channel, or a building gasket.

9. The laminate according to claim 4, which is a window frame seal, a glass run channel, or a building gasket.

10. A method for producing a thermoplastic elastomer composition (I), comprising a step (β) of mixing a mixture (α) comprising an ethylene/α-olefin/nonconjugated polyene copolymer (A), wherein the α-olefin has 3 or more carbon atoms, satisfying the following requirements (a1) to (a4) and a softener (C1);
360 to 460 parts by mass of a crystalline polyolefin (B) having a melt flow rate of 8.0 g/10 minutes or less measured under conditions of 230°C and a load of 2.16 kg;
2 to 9 parts by mass of a phenolic resin-based cross-linking agent (E);
2 to 6 parts by mass of a fatty acid-based lubricant (D), based on 100 parts by mass of the copolymer (A); and
optionally the softener (C1);
wherein a total amount of the softener (C1) comprised in the mixture (α) and the softener (C1) optionally mixed in the step (β) is 80 parts by mass or more, and
a mass fraction of the softener (C1) comprised in the mixture (α) relative to the total amount of the softener (C1) comprised in the mixture (α) and the softener (C1) optionally mixed in the step (β) is 60 to 100% by mass:
(a1) a weight-average molecular weight is 350,000 or more;
(a2) an intrinsic viscosity [η] is 4.0 dL/g or more;
(a3) an ethylene content is 57.0% by mass or more; and
(a4) a content of the nonconjugated polyene is 4.0% by mass or more.

11. The method for producing a thermoplastic elastomer composition (I) according to claim 10, further comprising a step (α) of kneading the copolymer (A) and the softener (C1) to prepare the mixture (α).

12. The method for producing a thermoplastic elastomer composition (I) according to claims 10 or 11, wherein a mass fraction of the softener (C1) comprised in the mixture (α) relative to a total amount of the softener (C1) comprised in the mixture (α) and the softener (C1) optionally mixed in the step (β) is 95 to 100% by mass.

13. The method for producing a thermoplastic elastomer composition (I) according to any one of claims 10 or 11, wherein the step (β) comprises a step of dynamically heat treating the copolymer (A), the crystalline polyolefin (B), the softener (C1) and the fatty acid-based lubricant (D) in the presence of the phenolic resin-based cross-linking agent (E).
